# EUROPEAN PATENT APPLICATION

(11) **EP 1 158 319 A2**
(43) Date of publication of application: **28.11.2001**
(21) Application number: 01111897.3
(22) Date of filing: 17.05.2001
(51) Int. Cl.: G02B 5/30

(54) **Wire grid type polarizer and method of manufacturing the same**

(30) Priority: 22.05.2000 JP 2000150402
(71) Applicant: JASCO CORPORATION, Hachioji-shi Tokyo 192-8537 (JP)
(72) Inventor: Kameno, Hayato, Hachioji-shi, Tokyo 192-8537 (JP); Yoshiki, Yasunobu, Hachioji-shi, Tokyo 192-8537 (JP)
(74) Representative: Patentanwälte Lippert, Stachow, Schmidt & Partner

(57) **Abstract**

The object of the present invention is to provide a wire grid type polarizer formed of an inexpensive material in a comparatively simple process.

A wire grid type polarizer of the present invention comprises:
a substrate which prevents light in a specific wavelength range from being transmitted therethrough; and
a photoresist layer provided on a surface and a back of the substrate,
wherein parallel line patterns having a plurality of concavo-convex portions are formed on the photoresist layer to be in parallel with each other on the surface and the back of the substrate, and
a metal is deposited only over a top of a convex portion of the parallel line patterns having the concavo-convex portions formed on the surface and the back of the substrate and in the vicinity thereof so that a wire grid is formed on the surface and the back of the substrate.

## Description

### RELATED APPLICATIONS

This application claims the priority of Japanese Patent Application No. 2000-150402 filed on May 22, 2000, which is incorporated herein by reference.

### FIELD OF THE INVENTION

The present invention relates to a polarizing element, and more particularly to an improvement in a wire grid type polarizer having a metallic parallel line pattern.

### BACKGOUND OF THE INVENTION

The grid type polarizer can easily obtain light having an oscillating direction easily by arranging a conductor grid in parallel, removing light oscillating in a parallel direction with the conductor grid from light transmitted through the polarizer and transmitting only light oscillating in a vertical direction. Therefore, the polarizer has been utilized to investigate physical properties and to resolve a phenomenon in a large field such as physics, chemistry, medicine, pharmacy, biology, mineralogy or astronomy through attachment to a light measuring apparatus such as a spectrometer or a radiometer.

In particular, the grid type polarizer is a polarizing element which is effective in an infrared range having no proper polarizing material differently from a visible range, and has often been utilized.

In measurement in which a high polarizing characteristic is required, however, the grid type polarizer does not fully have the polarizing characteristics and it has been desirable that the polarizing characteristics should be improved still more.

There has been well known a technique for improving the polarizing characteristic of such a grid type polarizer disclosed in Japanese Laid-Open Patent Publication No. Hei 60-230102 and Japanese Patent No. 2659024.

However, the technique described in the Japanese Laid-Open Patent Publication No. Hei 60-230102 does not fully have the polarizing characteristics required for measurement with high precision in recent years.

Moreover, a metal has been used for a conductor grid to be utilized for a grid polarizer. However, there has also been a problem in that the cost of the polarizer is increased if an expensive metal is used for the conductor grid.

Furthermore, there has been a problem in that the cost of the polarizer is increased and a production efficiency is reduced if the polarizer is produced in a complicated process in order to enhance the polarizing characteristics thereof.

### SUMMARY OF THE INVENTION

In consideration of the above-mentioned problems, it is an object of the present invention to provide a wire grid type polarizer formed of an inexpensive material in a comparatively simple process.

In order to achieve the above-mentioned object, the present invention provides a wire grid type polarizer comprising a substrate for preventing light in a specific wavelength range from being transmitted therethrough, and a photoresist layer provided on a surface and a back of the substrate, wherein parallel line patterns having a plurality of concavo-convex portions are formed on the photoresist layer to be in parallel with each other on the surface and the back of the substrate, and a metal is deposited only over a top of a convex portion of the parallel line patterns having the concavo-convex portions formed on the surface and the back of the substrate and in the vicinity thereof so that a wire grid is formed on the surface and the back of the substrate.

In the polarizer according to the present invention, moreover, it is preferable that the metal to be deposited only over the top of the convex portion of the parallel line pattern and in the vicinity thereof should be aluminum.

Furthermore, the present invention provides a method of manufacturing a wire grid type polarizer comprising the steps of providing a photoresist layer on a surface and a back of a substrate which prevents light in a specific wavelength range from being transmitted therethrough, exposing a plurality of parallel line patterns to one of surfaces of the substrate through interference of light in a wavelength range which is not transmitted through the substrate, exposing the parallel line patterns to one of the surfaces through the interference of the light in parallel with the parallel line pattern provided on the other surface, developing and thereby forming parallel line patterns having a plurality of concavo-convex portions on the surface and the back of the substrate, and depositing a metal only over a top of a convex portion of the parallel line pattern having the concavo-convex portions formed on the surface and the back of the substrate and in the vicinity thereof, thereby forming a wire grid.

In the manufacturing method according to the present invention, moreover, it is preferable that the metal should be deposited only over the top of the convex portion of the parallel line pattern having concavo-convex portions formed on the surface and the back of the substrate and in the vicinity thereof, and the metal should be subjected to oblique deposition in which the substrate is provided to carry out the deposition with a line connecting a center of the substrate and a deposition source of the metal to be deposited having a certain inclination with respect to a perpendicular line of the substrate.

In the manufacturing method according to the present invention, furthermore, it is preferable that when one deposition source for evaporating the metal to be deposited is provided, the substrate is provided to carry out the deposition with the line connecting the center of the substrate and the deposition source for the metal to be deposited having a certain inclination with respect to the perpendicular line of the substrate and the substrate is then rotated by 180 degrees with the perpendicular line of the substrate acting as an axis to deposit the metal again, and the substrate is turned over and is provided to carry out the deposition with the line connecting the center of the substrate and the deposition source for the metal to be deposited having a certain inclination with respect to the perpendicular line of the substrate and the substrate is then rotated by 180 degrees with the perpendicular line of the substrate acting as an axis to deposit the metal again.

According to the wire grid type polarizer of the present invention, an excellent polarizing characteristic can be obtained.

According to the method of manufacturing a wire grid type polarizer according to the present invention, it is possible to manufacture a polarizer having an excellent polarizing characteristic in a comparatively simple process.

### BRIEF DESCRIPTION OF THE DRAWINGS

Fig. 1 is a schematic sectional view showing a wire grid type polarizer according to an embodiment of the present invention,
Figs. 2A and 2B are schematic views showing a state in which a conductor grid is formed through oblique deposition,
Figs. 3A and 3B are sectional views illustrating the deposition state of the conductor grid,
Fig. 4 is a diagram illustrating a step of providing two deposition sources to deposit a metal,
Fig. 5 is a view illustrating a step of exposing interference fringes on a photoresist layer provided on a surface of a substrate by using a hologram method,
Fig. 6 is a graph showing the result of a transmittance test in the case in which polarizing directions are aligned,
Fig. 7 is a graph showing the result of a transmittance test in the case in which the polarizing directions are made orthogonal to each other, and
Fig. 8 is a graph showing the result of calculation of a polarization factor in each wavelength of polarizers used in transmittance tests 1 and 2.

### DETAILED DESCRIPTION OF THE PREFERRED EMBODIMENT

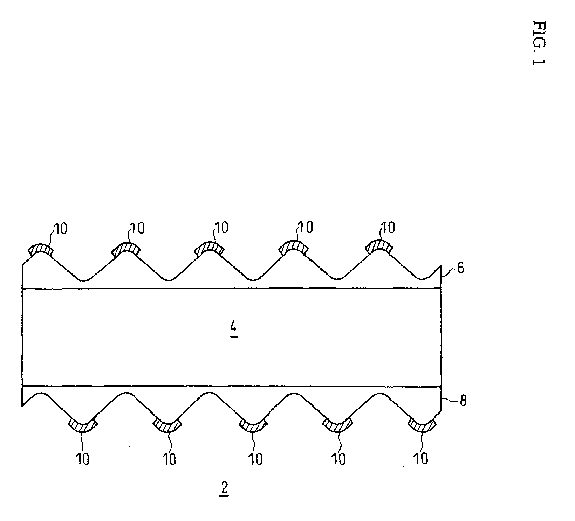

A wire grid type polarizer according to an embodiment of the present invention will be described below in detail. Fig. 1 is a schematic sectional view showing the wire grid type polarizer according to an embodiment of the present invention.

As shown in Fig. 1, a wire grid type polarizer 2 according to the present invention has a substrate 4 which prevents light in a specific wavelength range from being transmitted therethrough, and photoresist layers 6 and 8 provided on the surface and back of the substrate 4. The photoresist layers 6 and 8 are provided with a plurality of parallel line patterns having concavo-convex portions to be in parallel with each other on the surface and back of the substrate 4. A metal 10 is deposited only over the top of a convex portion of the parallel line patterns having concavo-convex portions formed on the surface and back of the substrate 4 and in the vicinity thereof so that a wire grid is formed on the surface and back of the substrate 4.

A method of manufacturing the wire grid type polarizer will be described for each step.

### Photoresist Layer Forming Step

The substrate of the wire grid type polarizer according to the present invention has such a property as not to transmit light in a specific wavelength range, and a photoresist layer is provided on the surface and back of the substrate by a spinner method or the like.

While the thickness of the substrate to be used is not particularly restricted, a thickness of 2 mm to 10 mm is suitable in consideration of the strength and functionality of the polarizer and the like.

Moreover, the thickness of the photoresist layer provided on the substrate is not particularly restricted but may be such that concavo-convex portions can be sufficiently formed at the step of exposing and developing interference fringes by utilizing the interference of light to form parallel line patterns having concavo-convex portions at a subsequent step. In consideration of an strength required after manufacture, such a thickness as to sufficiently form the concavo-convex portions and the like, a thickness of 1 µm to 5 µm is suitable.

### Exposing and Developing Step

On the surface of the photoresist layer provided on the substrate interference fringes are formed by interference light which has a wavelength belonging to a wavelength range which cannot be transmitted through the substrate as described above and which is obtained by a hologram method and the like, and thus the interference fringes are exposed on the photoresist layer provided on the surface of the substrate. When the interference fringes are exposed onto one of surfaces of the photoresist layer provided on the surface of the substrate, they are exposed onto the other surface of the substrate in the same procedure.

The substrate has such a property as not to transmit light in a specific wavelength range in order to prevent the photoresist layer provided on one of the surfaces from being exposed with the light transmitted through the substrate in the middle of the exposure of the photoresist layer provided on the other face of the substrate at the step of exposing the parallel line pattern by utilizing the interference of the light on the photoresist layer provided on the surface of the substrate.

For this reason, while the wavelength range of the light which cannot be transmitted through the substrate is not particularly restricted, it is necessary to transmit light having a wavelength to be polarized and to prevent the transmission of light to be used for forming interference fringes having a grid width to be intended after the wire grid type polarizer is manufactured.

For example, in order to obtain a polarizer to be used in an infrared region, a substrate is formed of KRS - 5, Si, CaF₂, BaF₂, ZnSe or the like and various laser beam sources such as a He - Cd laser beam source can be utilized for a light source to be used for forming interference fringes.

### Depositing Step

After the concavo-convex parallel line patterns are formed on the surface and back of the substrate, a metal is deposited only over the top of the convex portion of the parallel line patterns having concavo-convex portions formed on the surface and back of the substrate and in the vicinity thereof, thereby forming a wire grid.

The width of the wire grid greatly affects the polarizing characteristic of the polarizer. The width is almost determined depending on the wavelength of light generating interference fringes to be used for exposing the photoresist layer and the conditions of light irradiation. Therefore, a wavelength of the light and the irradiation conditions generating a space between the interference fringes by which an intended grid width can be obtained may be selected.

While the metal to be deposited is not particularly restricted, a metal such as aluminum which is inexpensive and can easily be treated is preferable for reducing the cost.

For the method of depositing a metal over the top of the convex portion of the parallel line patterns having concavo-convex portions formed on the surface and back of the substrate and in the vicinity thereof, oblique deposition is preferable. In the oblique deposition, the substrate is provided such that a line connecting the center of the substrate and the deposition source of the metal to be deposited has a certain inclination with respect to a perpendicular line of the substrate during the deposition of the metal, and the deposition is thus carried out.

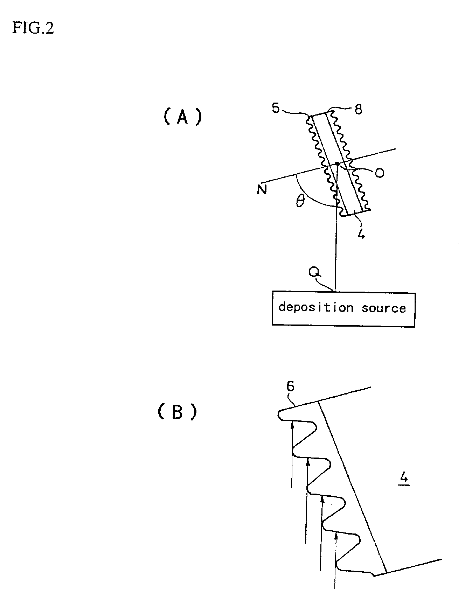

Figs. 2A and 2B are schematic views showing the case in which a conductor grid is to be formed through the oblique deposition. In Figs. 2A and 2B, portions corresponding to the same components as those in Fig. 1 have the same reference numerals and description thereof will be omitted.

As shown in Fig. 2A, in order to deposit a metal over the top of a convex portion of a parallel line pattern having concavo-convex portions formed by photoresist layers 6 and 8 and in the vicinity thereof on the surface and back of a substrate 4, the substrate 4 is provided such that a perpendicular line N thereof has a certain inclination θ with respect to a line OQ connecting a center O of the substrate 4 and a deposition source Q for depositing the metal.

When the substrate is thus provided to deposit the metal, it is possible to prevent the metal from being deposited in a concave portion between a convex portion and an adjacent convex portion in the concavo-convex portions of the photoresist layer 6 formed on the surface of the substrate 4 and to deposit the metal only over the top of the convex portion and in the vicinity thereof because the concave portion is hidden from the deposition source as shown in Fig. 2B.

At the depositing step, it is desirable that an angle formed by the line OQ connecting the center O of the substrate and the deposition source Q for depositing the metal and the perpendicular line N of the substrate should be properly selected to have an intended grid width. For example, an angle of 65 to 85 degrees is suitable. However, the value is varied depending on a depth of the concavo-convex portion formed on the photoresist and a space between the concavo-convex portions. Therefore, it is necessary to properly deposit the metal at a suitable angle in consideration of the wavelength of light which should be polarized by a polarizer to be manufactured, and the like.

As shown in Fig. 2A, when one deposition source for depositing the metal is provided, the following operation is suitably carried out. More specifically, the substrate 4 is provided to carry out the deposition with the line OQ connecting the center O of the substrate 4 and the deposition source Q of the metal to be deposited having a certain inclination of θ with respect to the perpendicular line N of the substrate 4 and the substrate 4 is then rotated by 180 degrees with the perpendicular line N of the substrate 4 acting as an axis and the metal is deposited again. Thereafter, the substrate 4 is turned over and is then provided to carry out the deposition with the line OQ connecting the center O of the substrate 4 and the deposition source Q of the metal to be deposited having a certain inclination with respect to the perpendicular line N of the substrate 4. Subsequently, the substrate 4 is rotated by 180 degrees with the perpendicular line N thereof acting as an axis and the metal is deposited again.

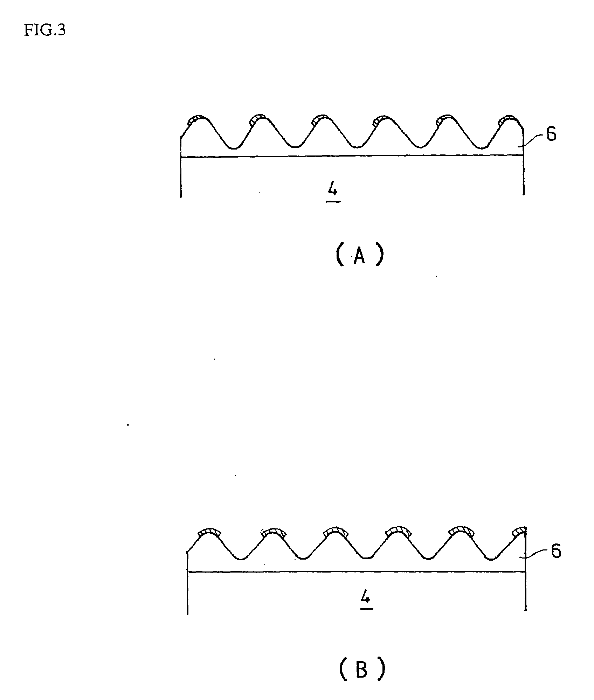

The reason why the deposition is carried out twice in different directions over one of the surfaces of the substrate is that the width and thickness of a conductor grid should be made uniform. Fig. 3 is a sectional view illustrating the state in which the conductor grid is deposited. In Fig. 3, portions corresponding to the same components as those in Fig. 1 have the same reference numerals and description thereof will be omitted.

Fig. 3A is a sectional view showing a polarizer in a state in which the deposition is carried out on one of the sides. In the state in which the deposition is carried out on one of the sides, though the metal is deposited over the top of the convex portion of the photoresist layer 6 and in the vicinity thereof, the shape of the concavo-convex portion of the photoresist layer 6 is neither planar nor blazed and is formed by a gentle curve and therefore the thickness of the deposited metal is also varied depending on a place. If the thickness is thus inconstant, there is such a portion as not to reach a thickness with which the metal is not transparent to the wavelength of the light to be polarized. Therefore the width of the conductor grid is not uniform over the whole polarizer. As a result, the polarizing characteristic of the manufactured polarizer is greatly affected.

However, when the deposition is carried out twice in the different directions over one of the surfaces of the substrate, the edge portion of the conductor grid can be clearly defined and the thickness and width of the conductor grid can be made uniform as shown in Fig. 3B.

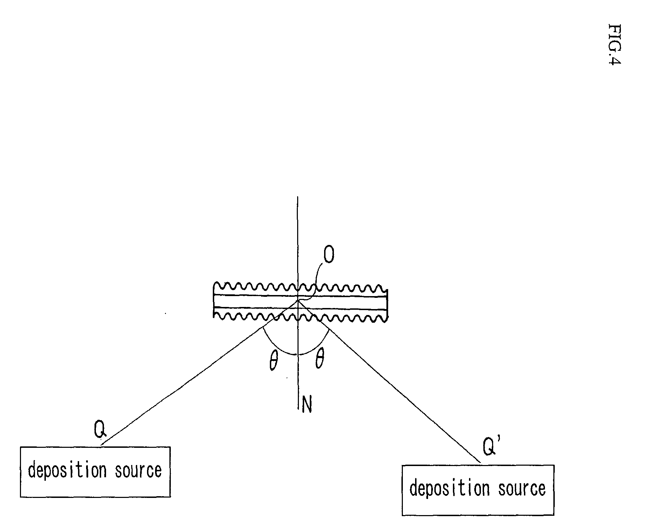

While the step of providing one deposition source to carry out the deposition has been described above, the present invention can apply various methods of depositing a metal only over the top of the convex portion of a parallel line pattern having concavo-convex portions formed on the surface and back of the substrate and in the vicinity thereof. As shown in Fig. 4, for example, even if two deposition sources Q and Q are provided and the substrate is provided to deposit a metal such that an angle of intersection of lines OQ and OQ connecting the center O of the substrate and the deposition sources and the perpendicular line N of the substrate is set to be equal, the polarizer can have high polarizing characteristics. By using such a depositing method, it is possible to manufacture the polarizer through the two-time deposition on the surface and back of the substrate.

In the conventional polarizer, the grid has been formed on only one of the surfaces of the substrate. Therefore, it has been only considered that the substrate transmits light having a wavelength which is to be polarized. And in the case in which a parallel line pattern is to be formed by optical means such as a hologram method, light to be used for the hologram method is mostly transmitted by the substrate. For this reason, it is meaningless that a photoresist layer is provided on the back of the substrate. In the wire grid type polarizer and the method of manufacturing the wire grid type polarizer according to the present invention, however, a substrate has such a property as not to transmit light having a wavelength set in a specific range. Therefore, the light having a wavelength in the same range can be used to form a parallel line pattern on a photoresist layer provided on both surfaces of the substrate by utilizing optical means such as the hologram method, and the photoresist layer can be directly formed on the substrate.

Consequently, it is possible to form a very fine and accurate parallel line pattern on the substrate. Moreover, it is possible to form a grid on both the surface and the back. Thus, the polarizing characteristics can be enhanced considerably.

Furthermore, a metal is deposited only over the top of the convex portion of the photoresist layer and in the vicinity thereof. Therefore, the loss of the metal can be diminished and the cost can be reduced. In addition, since the parallel line pattern having the concavo-convex portions of the photoresist provided on the substrate are exactly used for forming the grid, the manufacturing process is not wasted, and furthermore, each step can be carried out by a well-known work. Therefore, the steps themselves can be comparatively simplified for manufacture.

The present invention will be specifically described based on an example, but the present invention is not restricted thereto.

### <Examples>

A wire grid type polarizer having an excellent polarizing characteristic in an infrared range was manufactured.

KRS - 5 having a thickness of 3 mm was used for a substrate and a photoresist layer was provided on both a surface and a back thereof by a spinner method. A thickness of the photoresist layer was set to 1 µm. Then, a parallel line pattern having a plurality of concavo-convex portions was exposed to the photoresist layer provided on one of the surfaces of the substrate by using a hologram method through a He - Cd laser.

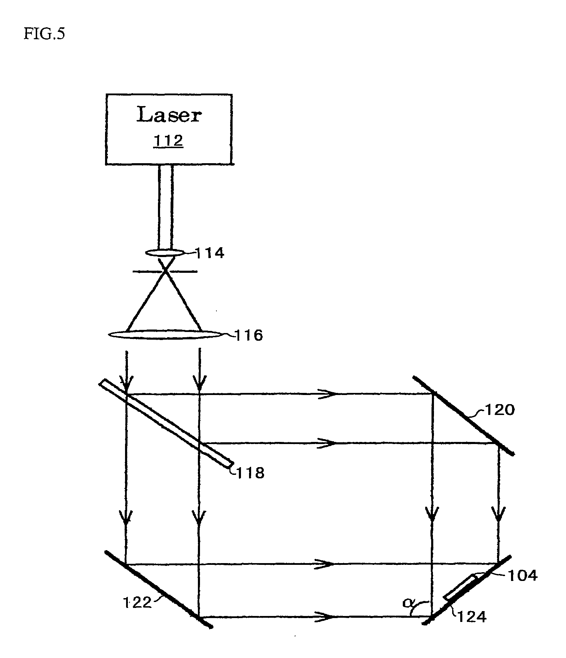

Fig. 5 shows the step of exposing interference fringes on the photoresist layer provided on the surface of the substrate by using the hologram method. In Fig. 5, portions corresponding to the same components as those in Fig. 1 have reference numerals obtained by adding 100 to the reference numerals in Fig. 1 and description thereof will be omitted.

As shown in Fig. 5, the width of a luminous flux of a laser beam emitted from a laser beam source 112 is changed and regulated through lenses 114 and 116 and the laser beam is then divided into two luminous fluxes through a beam splitter 118. The luminous fluxes thus divided are reflected by mirrors 120 and 122, and an angle formed by the two luminous fluxes is regulated to α to give a space between the interference fringes to be intended and the luminous fluxes are irradiated on a screen 124. A substrate 104 having a photoresist layer formed on both the surface and the back of the substrate is provided on the screen 124, and the interference fringes are exposed, through coherent light superposition, to a photoresist layer 106 provided on one of the surfaces of the substrate 104 exposed to a laser beam.

After the parallel line patterns are exposed to the photoresist layer 106 provided on one of the surfaces of the substrate 104, the substrate 104 is turned over and the parallel line patterns obtained by the interference fringes are exposed again to a photoresist layer 108 provided on the other surface of the substrate 104 to be in parallel with parallel line patterns provided on one of the surfaces. Thus the interference fringes are exposed to the photoresist layer on the surface and back of the substrate, and the photoresist layer is then developed. Consequently, it is possible to obtain a phase grating to be a parallel line pattern formed by a plurality of concavo-convex portions on the surface and back of the substrate 104.

Through the exposing and developing steps, a substrate provided with a phase grating to be a parallel line pattern formed by a plurality of concavo-convex portions on both the surface and the back is provided such that a line connecting the center of the substrate and a deposition source for a metal to be deposited has an inclination of 78 degrees with respect to the perpendicular line of the substrate, and deposition is carried out by using aluminum for the metal to be deposited. Then, the substrate is rotated by 180 degrees around the perpendicular line thereof and the deposition is carried out again. Thereafter, the substrate is turned over and is provided with the line connecting the center of the substrate and the deposition source having an inclination of 78 degrees with respect to the perpendicular line of the substrate in the same manner as in the previous step and the deposition is carried out again. In the same manner as mentioned above, the substrate is rotated by 180 degrees with the perpendicular line thereof acting as an axis and the deposition is carried out again. Consequently, the wire grid type polarizer having a body grid formed on both the surface and the back was obtained.

Thus, the wire grid type polarizer according to the present invention can be manufactured at a low cost in a comparatively simple process.

### Transmittance Test 1

The performance of the wire grid type polarizer thus obtained was tested. Two wire grid type polarizers obtained in the same process as the above-mentioned process for manufacturing the wire grid type polarizer were prepared. First of all, the polarizing directions of the two polarizers were aligned and superposed and light having various wavelengths was irradiated on the polarizers. The transmittance of the light having each wavelength was checked.

As a comparative example, moreover, the polarizing directions of two conventional polarizers having a conductor grid provided on one of the surfaces of each of substrates were aligned and superposed to carry out the same test.

In the present test, the polarizing directions are aligned. Therefore, it is apparent that the characteristics can be more enhanced with a higher transmittance.

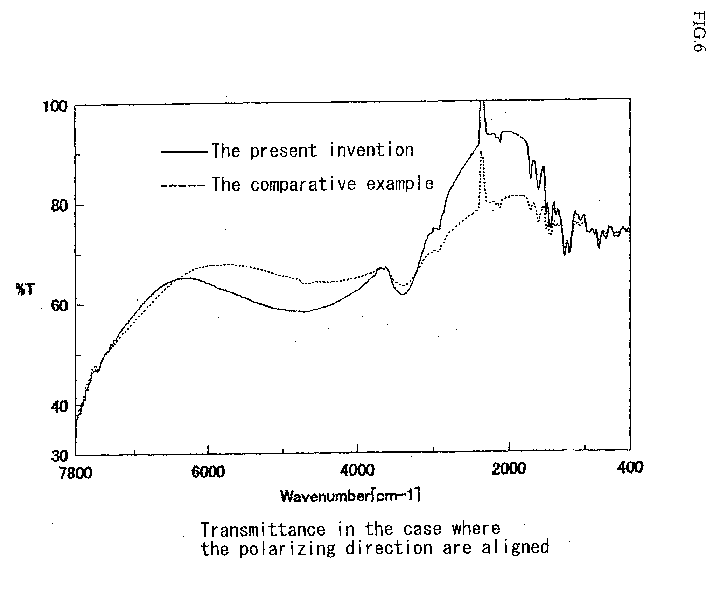

Fig. 6 shows the result of the transmittance test in which the polarizing directions are aligned.

The polarizer according to the present invention has a transmittance reduced in a short-wavelength region having a wave number of 4000 to 7000 / cm and has a transmittance enhanced considerably in a long-wavelength region of 1500 to 3000 / cm as compared with the polarizer according to the comparative example.

### Transmittance Test 2

Subsequently, the polarizing directions of the wire grid type polarizers used in the transmittance test 1 were made orthogonal to each other and were superposed, and light having various wavelengths was irradiated on the polarizers. Thus, the transmittance of the light having each wavelength was checked.

As a comparative example, moreover, the polarizing directions of two conventional polarizers having a conductor grid provided on one of the surfaces of each of substrates were made orthogonal to each other and were superposed to carry out the same test.

In the present test, the polarizing directions are orthogonal to each other. Therefore, the light oscillating in any direction is not transmitted. Therefore, it is apparent that a characteristic can be more excellent with a transmittance closer to zero.

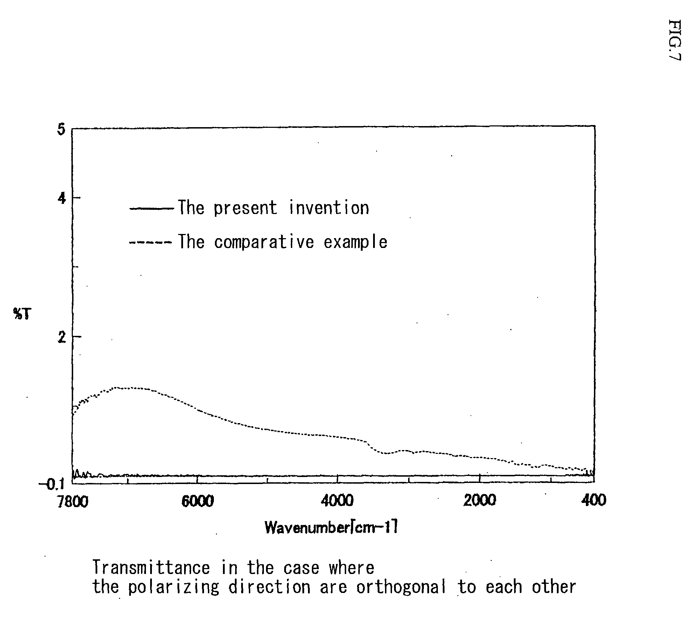

Fig. 7 shows the result of the transmittance test in which the polarizing directions are orthogonal to each other.
In the polarizer according to the comparative example, the transmittance is more reduced when light has a longer wavelength with a wave number having a peak of 7000 / cm and does not reach zero. On the other hand, in the polarizer according to the present invention, though transmission is slightly carried out in the short-wavelength region having a wavenumber of near 7000 / cm, a transmittance of 0 is obtained with almost all wavelengths within a wavelength range in which the test has been carried out. Thus, the characteristics can be enhanced considerably as compared with the comparative example.

A polarization factor was calculated based on the results of the transmittance tests.

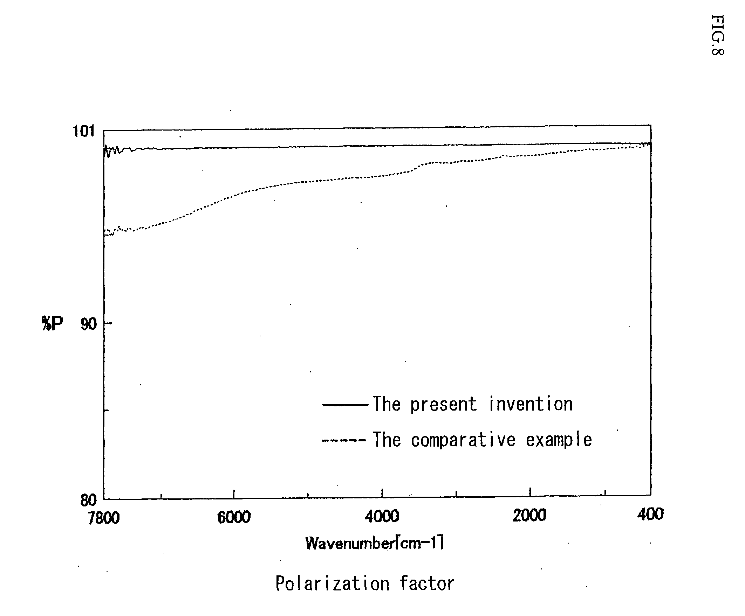

Fig. 8 shows the result of calculation of the polarization factor for each wavelength of the polarizers used in the transmittance tests 1 and 2. As shown in Fig. 8, it is apparent that the polarization factor of the polarizer according to the comparative example is deteriorated when the wave number is increased. Also on the long-wavelength side having a small wave number, the polarization factor does not reach 100 %. On the other hand, though the wire grid type polarizer according to the present invention has a polarization factor slightly varied on the short-wavelength side having a large wave number, a high polarization factor can be obtained, and furthermore, a polarization factor of approximately 100 % is obtained in other wavelength ranges used in the transmittance tests. Thus, the wire grid type polarizer according to the present invention can also produce good results for the polarizing characteristic.

## Claims

1. A wire grid type polarizer comprising:
a substrate which prevents light in a specific wavelength range from being transmitted therethrough; and
a photoresist layer provided on a surface and a back of the substrate,
wherein parallel line patterns having a plurality of concavo-convex portions are formed on the photoresist layer to be in parallel with each other on the surface and the back of the substrate, and
a metal is deposited only over a top of a convex portion of the parallel line patterns having the concavo-convex portions formed on the surface and the back of the substrate and in the vicinity thereof so that a wire grid is formed on the surface and the back of the substrate.

2. The wire grid type polarizer according to claim 1, wherein the metal to be deposited only over the top of the convex portion of the parallel line pattern and in the vicinity thereof is aluminum.

3. A method of manufacturing a wire grid type polarizer comprising the steps of:
providing a photoresist layer on a surface and a back of a substrate which prevents light in a specific wavelength range from being transmitted therethrough;
exposing a plurality of parallel line patterns to one of surfaces of the substrate through interference of light in a wavelength range which is not transmitted through the substrate, exposing the parallel line patterns to one of the surfaces through the interference of the light to be in parallel with the parallel line pattern provided on the other surface, developing and thereby forming parallel line patterns having a plurality of concavo-convex portions on the surface and the back of the substrate; and
depositing a metal only over a top of a convex portion of the parallel line pattern having the concavo-convex portions formed on the surface and the back of the substrate and in the vicinity thereof, thereby forming a wire grid.

4. The method of manufacturing a wire grid type polarizer according to claim 3, wherein the metal is deposited only over the top of the convex portion of the parallel line pattern having concavo-convex portions formed on the surface and the back of the substrate and in the vicinity thereof, and the metal is subjected to oblique deposition in which the substrate is provided to carry out the deposition with a line connecting a center of the substrate and a deposition source of the metal to be deposited having a certain inclination with respect to a perpendicular line of the substrate.

5. The method of manufacturing a wire grid type polarizer according to claim 4, wherein when one deposition source for evaporating the metal to be deposited is provided, the substrate is provided to carry out the deposition with the line connecting the center of the substrate and the deposition source for the metal to be deposited having a certain inclination with respect to the perpendicular line of the substrate and the substrate is then rotated by 180 degrees with the perpendicular line of the substrate acting as an axis to deposit the metal again, and
the substrate is turned over and is provided to carry out the deposition with the line connecting the center of the substrate and the deposition source for the metal to be deposited having a certain inclination with respect to the perpendicular line of the substrate and the substrate is then rotated by 180 degrees with the perpendicular line of the substrate acting as an axis to deposit the metal again.
